# EUROPEAN PATENT APPLICATION

(11) **EP 4 737 773 A1**
(43) Date of publication of application: **06.05.2026**
(21) Application number: 24831810.7
(22) Date of filing: 20.06.2024
(51) Int. Cl.: F16K 3/24, F16K 11/07

(54) **SPOOL-TYPE SWITCHING VALVE**

(30) Priority: 29.06.2023 JP 2023107459
(71) Applicant: SMC Corporation, Tokyo 104-0031 (JP)
(72) Inventor: MURAKAMI, Takashi, 3002493 Ibaraki (JP)
(74) Representative: Keil & Schaafhausen Patentanwälte PartGmbB
(86) International application number: PCT/JP2024/022325
(87) International publication number: WO 2025/004948

(57) **Abstract**

[Object] The present invention provides a spool-type switching valve in which a piston and a spool valve can be connected efficiently.

[Solution] The spool-type switching valve has a spool hole 25 elongated along an axial line L and has first and second piston chambers 32 positioned at respective opposite ends of the spool hole 25. The spool hole accommodates first and second spool valves 11b, and these piston chambers accommodate first and second pistons 33. First and second coupling portions 70b are disposed between a valve end surface 34 formed at an end of the spool valve and a piston end surface 33a of the piston that opposes the valve end surface 34. Each of the coupling portions has a projection 72 projecting from the valve end surface and a wall 36 projecting from the piston end surface. The coupling portion has an insertion recess 77 inside the wall 36. An engagement groove 73 is formed in the projection. The wall has a cutout groove that is cut out in the axial direction. The wall has a leg portion disposed inside the cutout groove and also has an engagement hook 47 formed at an end portion of the leg portion. In the state of the projection being inserted in the insertion recess, the engagement hook engages the engagement groove, and the spool valve and the piston are thereby connected together.

## Description

### Technical Field

The present invention relates to a spool-type switching valve in which a piston drives a spool valve that is slidably accommodated in a spool hole.

### Background Art

PTL 1 discloses an example of a known spool-type switching valve in which a piston drives a spool valve that is slidably accommodated in a spool hole. In this spool-type switching valve, the piston and the spool valve are provided as separate members and are connected together by a coupling portion. The coupling portion is formed by engaging an engagement portion provided at the spool valve with a counterpart engagement portion provided at the piston.

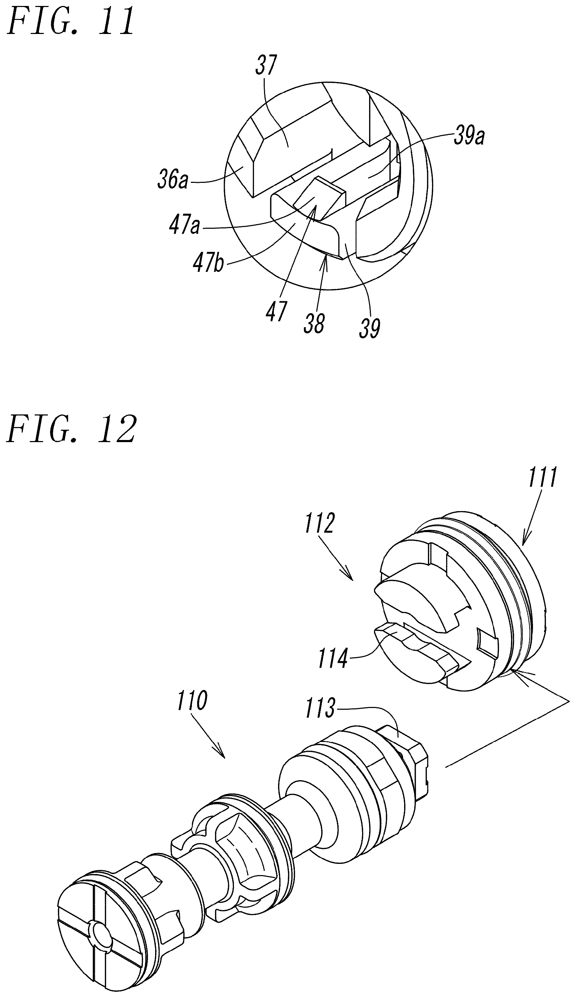

As illustrated in Fig. 12, the known spool-type switching valve uses a coupling portion 112 for connecting a spool valve 110 and a piston 111. The coupling portion 112 is structured such that an engagement portion 113 and a counterpart engagement portion 114 engage each other by moving the spool valve 110 and the piston 111 closer to each other in a direction orthogonally intersecting the axes thereof.

In the known structure of the coupling portion, however, the process of connecting the spool valve 110 and the piston 111 tends to become complicated and is not always efficient because it is necessary to move the spool valve 110 and the piston 111 closer to each other in the direction orthogonally intersecting the axes thereof as described above.

### Citation List

### Patent Literature

PTL 1: Japanese Unexamined Patent Application Publication No. 2013-24345

### Summary of Invention

### Technical Problem

Accordingly, the technical problem of the present invention is to provide a spool-type switching valve in which the piston and the spool valve are provided as separate members and the piston and the spool valve can be connected more efficiently.

### Solution to Problem

The present invention provides a spool-type switching valve that includes a body, a spool valve, and a piston. The body has a spool hole that has an axis and is elongated in an axial direction, and the body also has a piston chamber at an end of the spool hole in the axial direction. The spool valve is slidably accommodated in the spool hole, and the piston is slidably accommodated in the piston chamber. The body has ports for air inlet, air discharge, and output. The spool-type switching valve is configured to selectively switch states of communication among the ports by supplying and discharging pilot air to the piston chamber and thereby driving the piston together with the spool valve. The spool-type switching valve further includes a coupling portion that is disposed between a valve end surface of the spool valve and a piston end surface of the piston. The valve end surface faces the piston chamber in the axial direction, and the piston end surface opposes the valve end surface. The coupling portion connects the valve end surface and the piston end surface. The coupling portion includes a projection projecting from the valve end surface of the spool valve and an insertion recess formed at the piston end surface of the piston, the projection being inserted in the insertion recess. The projection has an engagement groove formed so as to extend circumferentially about the axis. An annular wall projects from the piston end surface, and the insertion recess is positioned inside the annular wall. The wall has a cutout groove formed through the wall in the axial direction and also has an engagement portion disposed in the cutout groove, the engagement portion engaging the engagement groove. The engagement portion includes a leg portion elongated in the axial direction and having a base portion fixed to the piston end surface and also includes an engagement hook formed at an end portion of the leg portion so as to project inward in a radial direction with the axis being a center. The engagement hook engages the engagement groove while the projection is inserted in the insertion recess. The leg portion is elastically deformable outward in the radial direction with the axis being the center.

In this case, the engagement hook preferably has a portion projecting inward in the radial direction and an inclined surface formed on the portion, and the inclined surface preferably inclines outward in the radial direction as a distance from the valve end surface of the spool valve becomes smaller. In addition, a recess is preferably formed at the piston end surface at a position where the leg portion is disposed, and a base portion of the leg portion is preferably disposed at a bottom of the recess.

Moreover, a stopper with which an end portion of the projection comes into contact is preferably formed at a bottom of the insertion recess. In a state in which the end portion of the projection is in contact with the stopper, a gap is preferably formed between the valve end surface of the spool valve and an end of the engagement portion, the end opposing the valve end surface.

The contact between the projection of the spool valve and the stopper of the piston is preferably achieved by contact between flat end surfaces that orthogonally intersect the axis. Moreover, the end of the engagement portion and a top surface of the wall that opposes the valve end surface are preferably positioned on a same plane that orthogonally intersects the axial direction.

Moreover, a plurality of the cutout grooves is preferably formed in the wall at an equiangular distance about the axis.

Furthermore, the piston chambers are preferably formed at respective opposite ends of the spool hole in the axial direction, and the pistons are preferably accommodated in respective piston chambers. Two of the spool valves are preferably accommodated in the spool hole. A length of the spool hole in the axial direction is preferably greater than a sum of axial lengths of the two spool valves. The coupling portion preferably connects each of the two spool valves accommodated in the spool hole to an adjacent one of the pistons.

### Advantageous Effects of Invention

As described above, the present invention can provide a spool-type switching valve in which the piston and the spool valve are provided as separate members and the piston and the spool valve can be connected more efficiently.

### Brief Description of Drawings

[Fig. 1] Fig. 1 is a perspective view illustrating a spool-type switching valve according to an embodiment of the present invention.
[Fig. 2] Fig. 2 is a plan view of the spool-type switching valve.
[Fig. 3] Fig. 3 is a side view of the spool-type switching valve.
[Fig. 4] Fig. 4 is a cross-sectional view of the spool-type switching valve taken along line IV-IV in Fig. 2.
[Fig. 5] Fig. 5 is a side view illustrating a second piston.
[Fig. 6] Fig. 6 is a rear view of the second piston.
[Fig. 7] Fig. 7 is an enlarged cross-sectional view illustrating region VII in Fig. 4.
[Fig. 8] Fig. 8 is an enlarged cross-sectional view illustrating a coupling state in which the second piston is at an advance position.
[Fig. 9] Fig. 9 is a cross-sectional view of the coupling portion taken along line IX-IX in Fig. 8.
[Fig. 10] Fig. 10 is a view for explaining a state when the second piston is coupled to a second spool valve.
[Fig. 11] Fig. 11 is an enlarged perspective view illustrating region XI in Fig. 10.
[Fig. 12] Fig. 12 is a diagram for explaining a state when a piston is coupled to a known spool valve.

### Description of Embodiments

A spool-type switching valve according to the present invention will be described below. Note that the following description focuses on an example of the spool-type switching valve according to the present embodiment, in other words, a pilot-type solenoid valve in which two spool valves are accommodated in a spool hole.

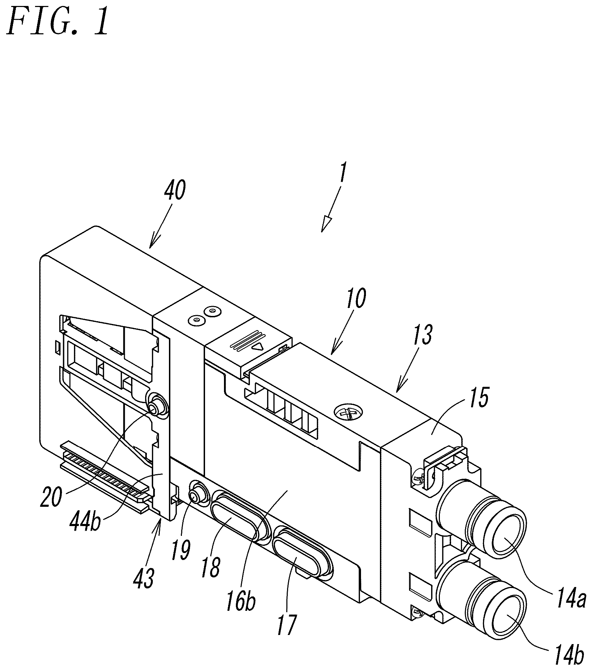

As illustrated in Figs. 1 to 4, a spool-type switching valve 1 includes a main valve unit 10 in which first and second spool valves 11a and 11b are accommodated and also includes a pilot valve unit 40 that has first- and second-pilot solenoid valves 41a and 41b. The main valve unit 10 includes a main valve body 13, which is the body of the main valve unit 10. The main valve body 13 is shaped like a cuboid elongated in the front-rear direction that orthogonally intersects the width direction of the main valve body 13. A port block 15 equipped with first and second output ports 14a and 14b is attached to the front end of the main valve body 13. The pilot valve unit 40 includes a pilot body 43, which is the body of the pilot valve unit 40. The pilot body 43 is connected to the rear end of the main valve body 13.

The main valve body 13 has side surfaces 16a and 16b that face oppositely, and the pilot body 43 has side surfaces 44a and 44b that face oppositely. Switching-valve intake openings 17 for supplying air, switching-valve exhaust openings 18 for discharging air, switching-valve-pilot supply openings 19 for supplying pilot air, and switching-valve-pilot exhaust openings 20 for discharging pilot air are open at corresponding side surfaces 16a, 16b, 44a, and 44b.

In the present embodiment, the switching-valve intake openings 17 and the switching-valve exhaust openings 18 are open at side surfaces 16a and 16b at lower and more frontward positions. The switching-valve-pilot supply openings 19 are open also at the side surfaces 16a and 16b at positions horizontally rearward from respective switching-valve exhaust openings 18 in the front-rear direction. The switching-valve-pilot exhaust openings 20 are formed at positions more upward and more rearward from the switching-valve-pilot supply openings 19.

Both switching-valve intake openings 17 are in communication with each other through a switching-valve intake-communication channel 21 formed in the main valve body 13. Both switching-valve exhaust openings 18 are in communication with each other through a switching-valve exhaust-communication channel 22 formed in the main valve body 13. Both switching-valve-pilot supply openings 19 are in communication with each other through a switching-valve-pilot supply channel 23 formed in the main valve body 13. Both switching-valve-pilot exhaust openings 20 are in communication with each other through a switching-valve-pilot exhaust channel 24 formed in the main valve body 13.

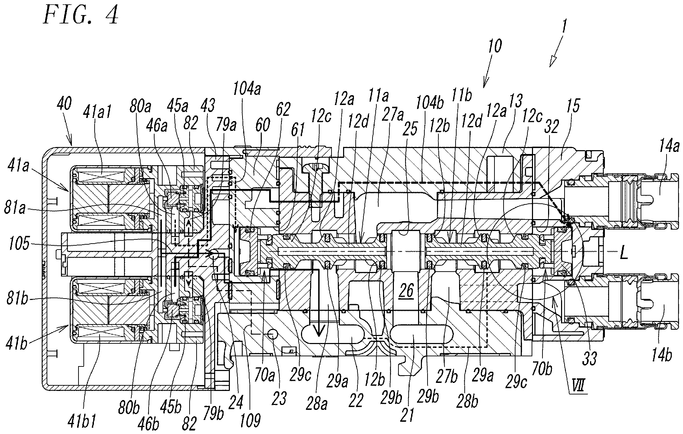

Next, the main valve unit 10 of the spool-type switching valve 1 is described. As illustrated in Fig. 4, the main valve unit 10 is formed such that a piston box 60 is attached to the rear end surface of the main valve body 13 and the port block 15 is attached to the front end surface of the main valve body 13.

A spool hole 25 is formed along an axial line L between opposite end surfaces of the main valve body 13 in the front-rear direction. The spool hole 25 is in communication with an intake channel 26 positioned in the middle along the axial line L. The spool hole 25 is also in communication with first and second output channels 27a and 27b positioned on both sides of the intake channel 26 and in communication with first and second exhaust channels 28a and 28b positioned on both sides of these output channels. The first and second exhaust channels 28a and 28b are in communication with each other through the switching-valve exhaust-communication channel 22.

A first spool valve 11a is slidably inserted in a rear section of the spool hole 25 along the axial line L, and a second spool valve 11b is slidably inserted in a front section of the spool hole 25 along the axial line L. In other words, the first and second spool valves 11a and 11b are accommodated in the spool hole 25 so as to align on the same axial line L. The length of the spool hole 25 along the axial line L is greater than the sum of the axial lengths of the first and second spool valves 11a and 11b.

Each of the spool valves 11a and 11b includes a first land portion 12a, a second land portion 12b, a third land portion 12c, and a shaft 12d. The first land portion 12a is positioned in the middle along the axial line L, and the second land portion 12b and the third land portion 12c are positioned on respective opposite sides of the first land portion 12a. The shaft 12d connects adjacent land portions together. The diameter of the shaft 12d is smaller than those of the land portions 12a, 12b, and 12c.

In each of the spool valves 11a and 11b, a first sealing member 29a is fitted on the periphery of the first land portion 12a, and a second sealing member 29b is fitted on the periphery of the second land portion 12b. A third sealing member 29c is also fitted on the periphery of the third land portion 12c. In the present embodiment, the third sealing member 29c is a lip-type sealing member that opens toward the first land portion 12a.

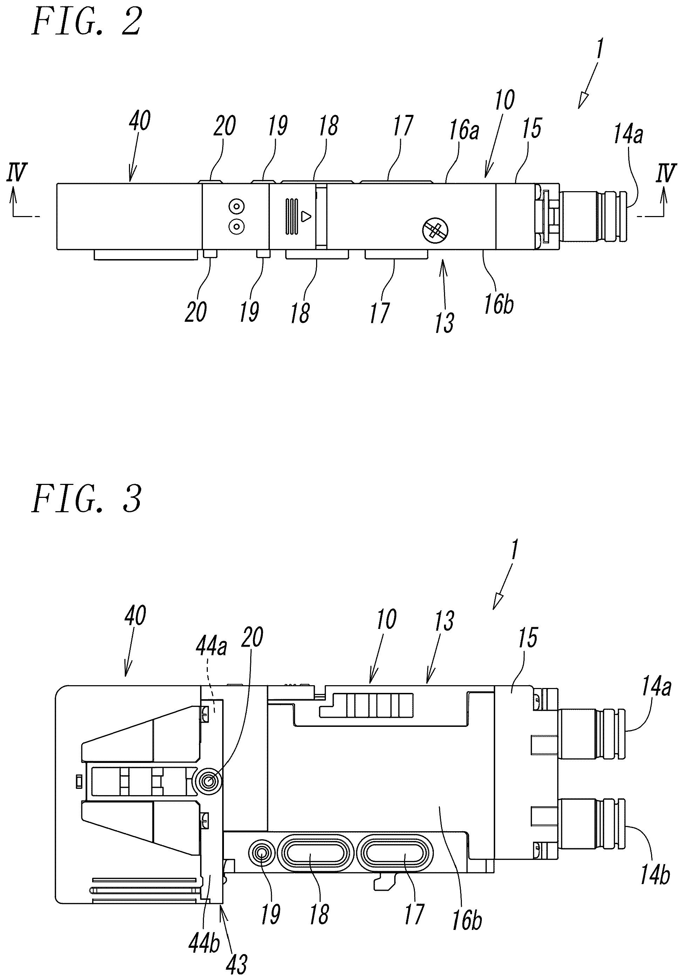

In the first spool valve 11a, the first sealing member 29a opens and closes a first exhaust channel 28a through which the switching-valve exhaust opening 18 (see Fig. 3) communicates with a first output port 14a. In the first spool valve 11a, the second sealing member 29b opens and closes the intake channel 26 through which the switching-valve intake opening 17 (see Fig. 3) communicates with the first output port 14a. In the first spool valve 11a, the third sealing member 29c allows air to flow from a first piston chamber 61 to the first exhaust channel 28a and prevents air from flowing from the first exhaust channel 28a to the first piston chamber 61.

In the second spool valve 11b, the first sealing member 29a opens and closes a second exhaust channel 28b through which the switching-valve exhaust opening 18 (see Fig. 3) communicates with a second output port 14b. In the second spool valve 11b, the second sealing member 29b opens and closes the intake channel 26 through which the switching-valve intake opening 17 (see Fig. 3) communicates with the second output port 14b. In the second spool valve 11b, the third sealing member 29c allows air to flow from a second piston chamber 32 to the second exhaust channel 28b and prevents air from flowing from the second exhaust channel 28b to the second piston chamber 32.

The piston box 60 has the first piston chamber 61 that opens frontward. A first piston 62 is slidably inserted in the first piston chamber 61 along the axial line L. The first piston 62 has a diameter greater than that of the first spool valve 11a. The port block 15 has the second piston chamber 32 that opens rearward. A second piston 33 is slidably inserted in the second piston chamber 32 along the axial line L. The second piston 33 has a diameter greater than that of the second spool valve 11b.

The first spool valve 11a and the first piston 62 are positioned adjacent to each other along the axial line L and are connected together by a first coupling portion 70a. The second spool valve 11b and the second piston 33 are connected together by a second coupling portion 70b. Note that the first coupling portion 70a and the second coupling portion 70b are structured similarly, and the following description focuses on the second coupling portion 70b while omitting the description of the first coupling portion 70a.

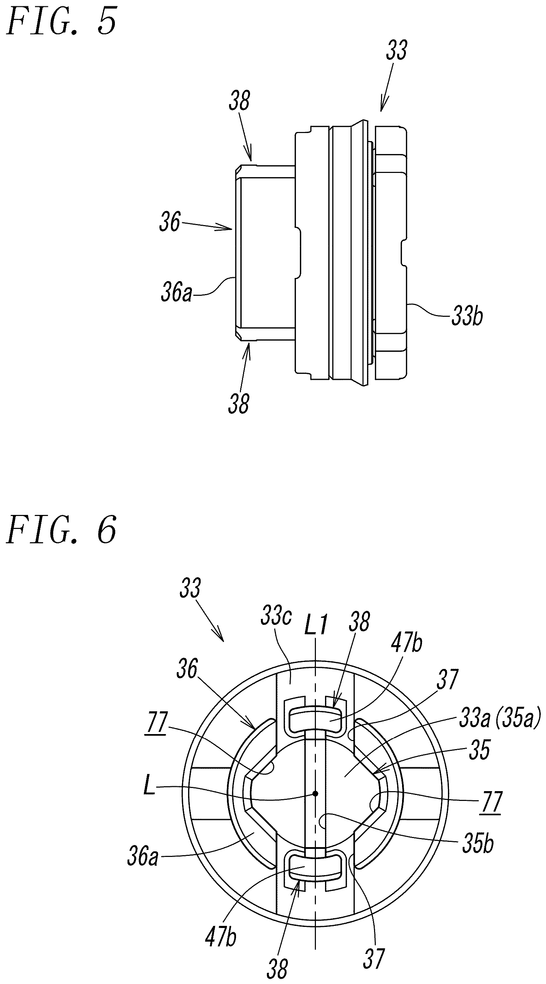

As illustrated in Figs. 5 to 11, the second spool valve 11b has a valve end surface 34 that faces the second piston chamber 32 along the axial line L, and the second piston 33 has a piston end surface 33a that opposes the valve end surface 34. The second coupling portion 70b connects the valve end surface 34 and the piston end surface 33a. The second coupling portion 70b includes a projection 72 and an insertion recess 77. The projection 72 projects from the valve end surface 34 of the second spool valve 11b, and the insertion recess 77 is formed at the piston end surface 33a of the second piston 33. The projection 72 is inserted in the insertion recess 77.

In the present embodiment, the valve end surface 34 has an annular shape that stretches in directions orthogonally intersecting the axial line L (hereinafter referred to as "radial directions"). The projection 72 shaped like a round column projects from the valve end surface 34. The projection 72 extends along axial line L coaxially. An engagement groove 73 is formed in a rear portion of the projection 72. The engagement groove 73 extends circumferentially about the axial line L. The circumferential outer shape of the projection 72 about the axial line L is like a polygon. In the present embodiment, the circumferential outer shape of the projection 72 is octagonal. The diameter of the projection 72 is smaller than that of the third land portion 12c of the second spool valve 11b.

The end portion of the projection 72 (i.e., the front end along the axial line L) has a flat end surface 74 that stretches in the radial directions. The flat end surface 74 comes into contact with a flat end surface 35a of a stopper 35 of the second piston 33 (which will be described later).

The second piston 33 is shaped like a round column. The second piston 33 has a front surface 33b on which pilot air acts and also has the piston end surface 33a that is a rear surface of the second piston 33 that faces opposite to the front surface 33b. The front surface 33b and the piston end surface 33a stretch in the radial directions. An annular wall 36 projects from the piston end surface 33a as illustrated in Figs. 5 to 11. The insertion recess 77 is defined by the wall 36.

When the insertion recess 77 is viewed along axial line L, the circumferential inner surface of the insertion recess 77 has an octagonal shape that surrounds the axial line L. In the present embodiment, the wall 36 is shaped like a hollow cylinder, and the insertion recess 77 is defined so as to have the octagonal shape that is similar to the outer shape of the projection 72 of the second spool valve 11b. Accordingly, the second piston 33 can be integrally connected to the second spool valve 11b along the axial line L by inserting the projection 72 into the insertion recess 77.

The wall 36 has a cutout groove 37 and an engagement portion 38. The cutout groove 37 is formed through the wall 36 along the axial line L, and the engagement portion 38 is disposed in the cutout groove 37 and engages the engagement groove 73. The engagement portion 38 includes a leg portion 39 and an engagement hook 47. The leg portion 39 is elongated along the axial line L and has a base portion fixed to the piston end surface 33a. The engagement hook 47 is formed at the tip end of the leg portion 39 so as to project inward in the radial direction about the axial line L. In the present embodiment, multiple cutout grooves 37 are formed in the wall 36 so as to oppose each other with the axial line L being interposed in the middle. In other words, the cutout grooves 37 are formed in the wall 36 at an equiangular distance (approximately 180 degrees) about the axial line L. The end of the cutout groove 37 opens at the top end of the wall 36, and the base end of the cutout groove 37 is in communication with a recess 33c formed at the piston end surface 33a. The recess 33c extends outward in the radial direction from the base end of the cutout groove 37 and opens at the outer peripheral surface of the second piston 33.

The cutout groove 37 is defined by a pair of opposing surfaces of the wall, and the leg portion 39 is positioned so as to have gaps from these surfaces. The leg portion 39 projects from the bottom of the recess 33c and extends inside the cutout groove 37 along the axial line L. In the present embodiment, the leg portion 39 is shaped like a cuboid and has a hole 39a formed in a middle part of the leg portion 39 so as to pierce through the leg portion 39 in the radial direction. The leg portion 39 is elastically deformable in the radial direction.

When the projection 72 is inserted in the insertion recess 77, the engagement hook 47 enters, and thereby engages, the engagement groove 73. The engagement hook 47 has a portion projecting inward in the radial direction, and an inclined surface 47a is formed thereon. The inclined surface 47a inclines outward in the radial direction as the distance from the valve end surface 34 of the second spool valve 11b becomes smaller. Accordingly, when the projection 72 is inserted into the insertion recess 77, the projection 72 is brought into contact with the inclined surface 47a, which causes the leg portion 39 to deform elastically and causes the engagement hook 47 to open easily outward in the radial direction. This enables smooth insertion of the projection 72 into the insertion recess 77.

The tip end of the engagement portion 38 and a top surface 36a of the wall 36 that opposes the valve end surface 34 are positioned on the same plane that orthogonally intersects the axial line L. In other words, a hook-end surface 47b of the engagement hook 47 that opposes the valve end surface 34 and the top surface 36a of the wall 36 are positioned on the same plane that orthogonally intersects the axial line L. Note that the tip end of the engagement portion 38 may project further toward the valve end surface 34 than the top surface 36a of the wall 36.

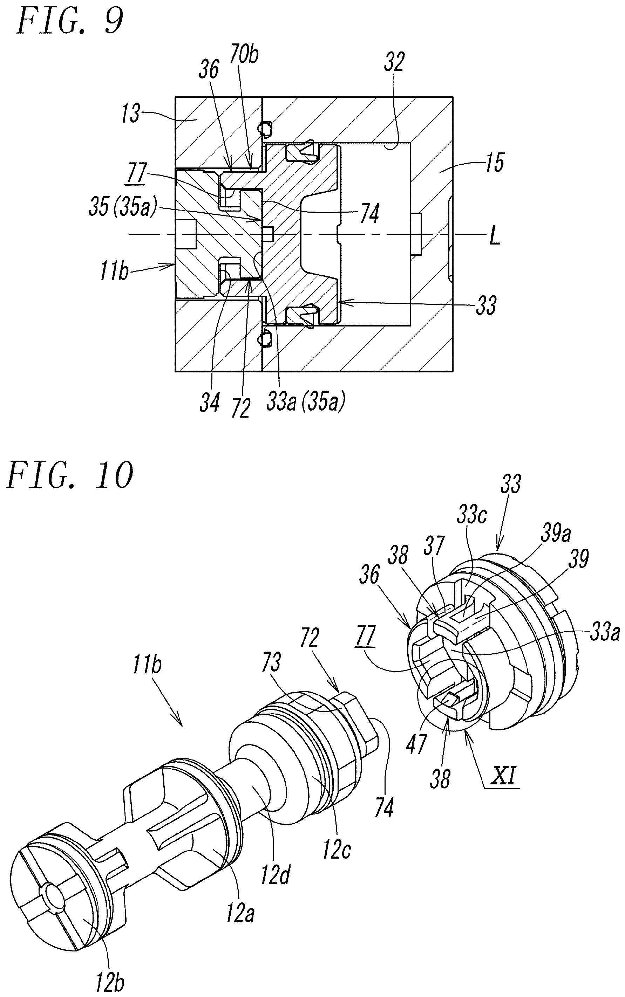

As illustrated in Figs. 6 and 9, the contact between the projection 72 of the second spool valve 11b and the piston end surface 33a (or the stopper 35) of the second piston 33 is achieved by the contact between the flat end surface 74 and a flat end surface 35a that orthogonally intersect the axial line L. More specifically, the stopper 35 with which the projection 72 comes into contact is formed at the bottom of the insertion recess 77, and the stopper 35 has the flat end surface 35a that stretches in the radial directions that orthogonally intersect the axial line L.

In the present embodiment, the flat end surface 35a is formed on the same plane on which the piston end surface 33a stretches. The flat end surface 35a is shaped like an ellipsis as viewed along the axial line L.
The elliptic flat end surface 35a is shaped symmetrically with respect to a central axis line L1 that passes through the center of the bottom of the insertion recess 77 and connects a pair of the leg portions 39 to each other. Note that the shape of the flat end surface 35a is not limited to the ellipsis but may be a circle or a rectangle. A groove 35b is formed at the flat end surface 35a.

The end portion of the projection 72 of the second spool valve 11b has the flat end surface 74 that orthogonally intersects the axial line L. In the present embodiment, the flat end surface 74 is formed so as to have an elliptic shape that is similar to that of the flat end surface 35a. The flat end surface 74 can come into close contact with the flat end surface 35a when the projection 72 is inserted into the insertion recess 77.

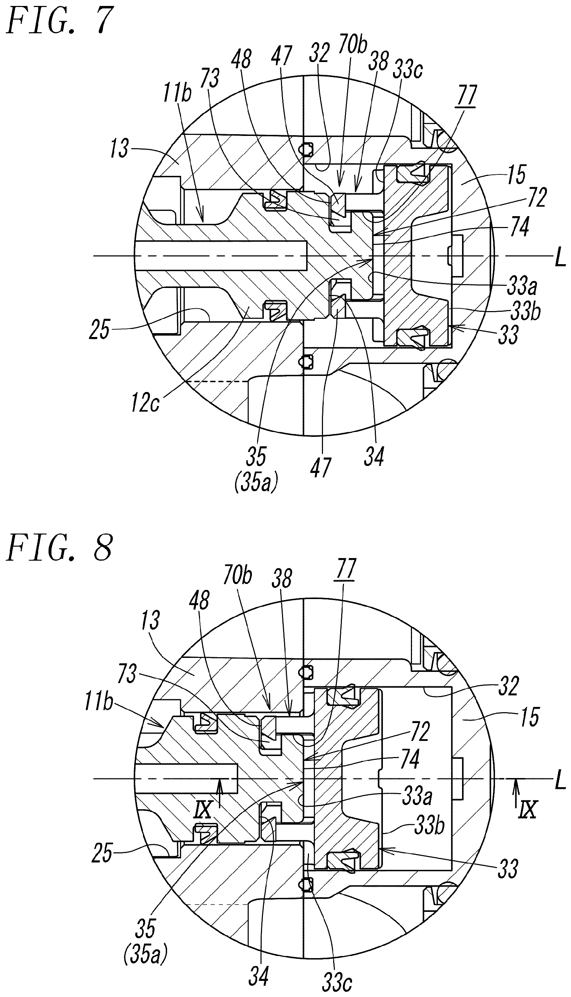

Figs. 7 and 8 illustrates states in which the second piston 33 is moved to a rear end position (i.e., retreat position) and to a front end position (i.e., advance position) in the second piston chamber 32 while the end portion of the projection 72 is in contact with the stopper 35. In the above states, a gap 48 is provided in the second coupling portion 70b between the valve end surface 34 of the second spool valve 11b and the tip end of the engagement portion 38 that opposes the valve end surface 34. In the present embodiment, the gap 48 is formed between the valve end surface 34 of the second spool valve 11b and the hook-end surface 47b of the engagement hook 47 that opposes the valve end surface 34. This eliminates the likelihood of the engagement hook 47 coming into contact with the valve end surface 34 of the second spool valve 11b, which can prevent the breakage of the engagement portion 38.

Next, the pilot valve unit 40 is described. As illustrated in Fig. 4, the pilot valve unit 40 includes first- and second-pilot solenoid valves 41a and 41b that drive the first and second spool valves 11a and 11b, respectively. The first- and second-pilot solenoid valves 41a and 41b have first- and second-pilot inlet channels 79a and 79b, first- and second-pilot output channels 80a and 80b, and first- and second-pilot exhaust channels 81a and 81b, respectively. Due to the energization of solenoids 41a1 and 41b1, the first- and second-pilot solenoid valves 41a and 41b cause the first- and second-pilot output channels 80a and 80b either to communicate with the first- and second-pilot inlet channel 79a and 79b or to communicate with the first- and second-pilot exhaust channels 81a and 81b.

The first- and second-pilot inlet channel 79a and 79b communicate with the switching-valve-pilot supply channel 23 through a pilot input channel 109 formed in the pilot body 43 and in the main valve body 13. The first-pilot output channel 80a communicates with the first piston chamber 61 through a first-pilot supply-communication channel 104a formed in the pilot body 43 and in the piston box 60. The second-pilot output channel 80b communicate with the second piston chamber 32 through a second-pilot supply-communication channel 104b formed in the pilot body 43, in the piston box 60, and in the main valve body 13. The first- and second-pilot exhaust channel 81a and 81b communicates with a pilot discharge channel 105 formed in the pilot body 43 and in the piston box 60. On the upstream side, the pilot discharge channel 105 communicates with the switching-valve-pilot exhaust channel 24.

The pilot discharge channel 105 extends through the pilot body 43 and the piston box 60 and further extends to the first exhaust channel 28a through the gap formed between the third sealing member 29c and the spool hole 25. The third sealing member 29c is a lip-type sealing member that opens toward the second land portion 12b. The third sealing member 29c allows air to flow from the first piston 62 toward the first exhaust channel 28a and prevents air from flowing from the first exhaust channel 28a toward the first piston 62.

The first- and second-pilot solenoid valves 41a and 41b include respective pilot valve bodies 82 in the front portions thereof. Each of the pilot valve bodies 82 includes an inlet valve body 45a or 45b and a discharge valve body 46a or 46b. The inlet valve body 45a or 45b and corresponding discharge valve body 46a or 46b are disposed in front and rear positions and work together. The energization of the solenoid 41a1 or the solenoid 41b1 causes the inlet valve body 45a or the inlet valve body 45b to open, which causes the first-pilot inlet channel 79a to communicate with the first-pilot output channel 80a or causes the second-pilot inlet channel 79b to communicate with the second-pilot output channel 80b. In addition, the energization of the solenoid 41a1 or the solenoid 41b1 causes the discharge valve body 46a or the discharge valve body 46b to close, which shuts down the flow channel from the first-pilot output channel 80a to the pilot discharge channel 105 or shuts down the flow channel from the second-pilot output channel 80b to the pilot discharge channel 105. As a result, pilot air is supplied to the first piston chamber 61 or to the second piston chamber 32.

The de-energization of the solenoid 41a1 or the solenoid 41b1 causes the inlet valve body 45a or 45b to close and the discharge valve body 46a or 46b to open. Moreover, the flow channel from the first-pilot output channel 80a to the first-pilot exhaust channel 81a or the flow channel from the second-pilot output channel 80b to the second-pilot exhaust channel 81b is open, which causes the first piston chamber 61 or the second piston chamber 32 to discharge the supplied air. As a result, the first spool valve 11a or the second spool valve 11b returns to the original position because the air flowing from the switching-valve intake-communication channel 21 to the spool hole 25 through the intake channel 26 acts on the first and second spool valves 11a and 11b.

The following describes an operation of connecting the second spool valve 11b and the second piston 33 together. As illustrated in Fig. 10, the second piston 33 is placed in front of the end portion of the projection 72 of the second spool valve 11b with the insertion recess 77 of the second piston 33 facing the second spool valve 11b. Next, at least one of the second spool valve 11b and the second piston 33 is moved closer to each other, thereby inserting the projection 72 into the insertion recess 77. As a result, the engagement hook 47 of the second piston 33 engages the engagement groove 73 of the second spool valve 11b to connect the second spool valve 11b and the second piston 33 together.

The second spool valve 11b and the second piston 33 can be connected together by moving the second spool valve 11b and the second piston 33 linearly so as to come closer to each other. This simplifies the connection operation and enables the second spool valve 11b and the second piston 33 to be connected efficiently.

### Reference Signs List

- 1: spool-type switching valve
- 11a: first spool valve (spool valve)
- 11b: second spool valve (spool valve)
- 13: main valve body (body)
- 14a: first output port (output port)
- 14b: second output port (output port)
- 15: port block (body)
- 17: switching-valve intake opening (intake port)
- 18: switching-valve exhaust opening (exhaust port)
- 25: spool hole
- 32: second piston chamber (piston chamber)
- 33: second piston (piston)
- 33a: piston end surface
- 33c: recess
- 34: valve end surface
- 35: stopper
- 35a, 74: flat end surface
- 36: wall
- 36a: top surface
- 37: cutout groove
- 38: engagement portion
- 39 leg: portion
- 47: engagement hook
- 47a: inclined surface
- 48: gap
- 60: piston box (body)
- 61: first piston chamber (piston chamber)
- 62: first piston (piston)
- 70a: first coupling portion (coupling portion)
- 70b: second coupling portion (coupling portion)
- 72: projection
- 73: engagement groove
- 77: insertion recess
- L: axial line (axis)

## Claims

1. A spool-type switching valve including a body having a spool hole that has an axis and is elongated in an axial direction and having a piston chamber at an end of the spool hole in the axial direction, the spool-type switching valve also including a spool valve slidably accommodated in the spool hole and a piston slidably accommodated in the piston chamber, the body having ports for air inlet, air discharge, and output, the spool-type switching valve being configured to selectively switch states of communication among the ports by supplying and discharging pilot air to the piston chamber and thereby driving the piston together with the spool valve, the spool-type switching valve comprising:
a coupling portion being disposed between a valve end surface of the spool valve and a piston end surface of the piston, the valve end surface facing the piston chamber in the axial direction, the piston end surface opposing the valve end surface, the coupling portion connecting the valve end surface and the piston end surface, wherein
the coupling portion includes a projection projecting from the valve end surface of the spool valve and an insertion recess formed at the piston end surface of the piston, the projection being inserted in the insertion recess,
the projection has an engagement groove formed so as to extend circumferentially about the axis,
an annular wall projects from the piston end surface, and the insertion recess is positioned inside the annular wall,
the wall has a cutout groove formed through the wall in the axial direction and also has an engagement portion disposed in the cutout groove, the engagement portion engaging the engagement groove,
the engagement portion includes
a leg portion elongated in the axial direction and having a base portion fixed to the piston end surface and
an engagement hook formed at an end portion of the leg portion so as to project inward in a radial direction with the axis being a center,
the engagement hook engages the engagement groove while the projection is inserted in the insertion recess, and
the leg portion is elastically deformable outward in the radial direction with the axis being the center.

2. The spool-type switching valve according to Claim 1, wherein
the engagement hook has a portion projecting inward in the radial direction and an inclined surface formed on the portion, and
the inclined surface inclines outward in the radial direction as a distance from the valve end surface of the spool valve becomes smaller.

3. The spool-type switching valve according to Claim 1, wherein
a recess is formed at the piston end surface at a position where the leg portion is disposed, and a base portion of the leg portion is disposed at a bottom of the recess.

4. The spool-type switching valve according to Claim 1, wherein
a stopper with which an end portion of the projection comes into contact is formed at a bottom of the insertion recess, and
in a state in which the end portion of the projection is in contact with the stopper, a gap is formed between the valve end surface of the spool valve and an end of the engagement portion, the end opposing the valve end surface.

5. The spool-type switching valve according to Claim 4, wherein
the contact between the projection of the spool valve and the stopper of the piston is achieved by contact between flat end surfaces that orthogonally intersect the axis.

6. The spool-type switching valve according to Claim 4, wherein
the end of the engagement portion and a top surface of the wall that opposes the valve end surface are positioned on a same plane that orthogonally intersects the axial direction.

7. The spool-type switching valve according to Claim 1, wherein
a plurality of the cutout grooves is formed in the wall at an equiangular distance about the axis.

8. The spool-type switching valve according to any one of Claims 1 to 7, wherein
the piston chambers are formed at respective opposite ends of the spool hole in the axial direction,
the pistons are accommodated in respective piston chambers,
two of the spool valves are accommodated in the spool hole,
a length of the spool hole in the axial direction is greater than a sum of axial lengths of the two spool valves, and
the coupling portion connects each of the two spool valves accommodated in the spool hole to an adjacent one of the pistons.
